# EUROPEAN PATENT SPECIFICATION

(11) **EP 2 665 591 B1**
(45) Date of publication and mention of the grant of the patent: **14.11.2018**
(21) Application number: 12702326.5
(22) Date of filing: 17.01.2012
(51) Int. Cl.: B29K 105/00, C04B 20/10, C08J 9/232, C08J 9/33, C08J 9/36, C04B 103/63, C09K 21/14, B29C 44/34

(54) **METHOD FOR MANUFACTURING A FIRE RETARDANT COMPOSITE AND COMPOSITE THUS OBTAINED**
VERFAHREN ZUR HERSTELLUNG EINES FLAMMHEMMENDEN VERBUNDSTOFFES UND SO ERHALTENER VERBUNDSTOFF
PROCÉDÉ DE FABRICATION D'UN COMPOSITE IGNIFUGEANT ET COMPOSITE AINSI OBTENU

(30) Priority: 17.01.2011 NL 2006018
(43) Date of publication of application: 27.11.2013
(73) Proprietor: Ertecee B.V., 7575 CA Oldenzaal (NL)
(72) Inventor: NOORDEGRAAF, Jan, NL-6602 ZX Wijchen (NL); DE SWART, Henricus Johanna, NL-5103 EB Dongen (NL); FEIJT, Richard Antonius, NL-4874 ML Etten-leur (NL); WETERINGS, Johannes Louis Jacobus, NL-4872 PS Etten-leur (NL); BUIJK, Christianus Marcus Gijsbertus Maria, NL-5616 HE Eindhoven (NL); RENSEN, Petrus Frederikus Maria, NL-6686 MH Doornenburg (NL); KEMPERMAN, Wilhelmus Petrus Theodorus, NL-5527 AA Hapert (NL); VAN DER BURGT, Petrus Henricus Johannes, NL-6631 KW Horssen (NL); EILERS, Gerardus Wilhelmus Jozef, NL-5706 BJ Helmond (NL); RATHBUN, Moses, NL-6222 AE Maastricht (NL); SMITS, Hugo Alexander, NL-5644 CA Eindhoven (NL)
(74) Representative: Algemeen Octrooi- en Merkenbureau B.V.
(86) International application number: PCT/NL2012/050027
(87) International publication number: WO 2012/099467

(56) References cited:
- WO-A1-2007/013791
- WO-A1-2007/091853
- AT-B- 396 689

## Description

The present invention relates to a method of manufacturing a fire retardant composite, a composite of a foamed polymer having a coating with fire retardant properties, and also the use of such composites.

US 5 462 699 relates to a fire retardant composition for application to, *inter alia,* building materials, the composition containing a silicate, water and surfactant.

International application WO 2007/013791 relates to a method of manufacturing a fire retardant composite, the method comprising the following steps: i) providing beads of foamed polymer, ii) applying a coating on the beads of step i) and iii) shaping the thus coated beads into said composite. As a coating an aqueous gel -forming composition is used, comprising: (a) from 5% to 40%, preferably from 10% to 25% by weight of an aluminosilicate; (b) 0 to 10%, preferably from 0.3% to 5% by weight of a film-integrity enhancing organic liquid; and the balance being the water and one or more optional other ingredients.

International application WO 2007/091853 relates to an expanded organic plastic foam material, which is produced by preparing plastic beads or plastic foams, modifying silicate with at least one selected from among an alkaline earth metal compound, an alkaline earth metal compound-containing material, and an acid, coating the modified silicate on the prepared plastic beads or plastic foams, melt- molding the coated plastic beads or plastic foams while applying heat and pressure thereto, and drying the molded material. The alkaline earth metal compound-containing material is at least one selected from cement, blast furnace cement, magnesia cement, gypsum, lime, and blast furnace slag.

AT 396 689 relates to a flameproof material made from lightweight concrete, the lightweight concrete comprising polystyrene foam particles having a size of from 2 to 8 mm which have been partially melted (partially sintered) beforehand on their surfaces by means of heat treatment and where these heat-treated polystyrene foam particles have been clad with cement, water and cement accelerator prior to the formation of the lightweight concrete. In the course of the formation of the lightweight concrete these particles thus pretreated are mixed with water and cement, after which this mixture is placed in moulds and mechanically formatted, this mixture being impregnated with aqueous solutions of silicates after production

Other routes for manufacturing a fire retardant coating to be applied on a foamed polymer are e.g.:
sodium silicate + esters (e.g. diacetin or triacetin),
sodium silicate + aluminum tripolyphosphate,
sodium silicate + calcium phosphate,
sodium silicate + aluminum sulphate.

The problem with using a silicate based fire retardant composition for building insulation materials such as expanded polystyrene (e.g. roofing insulation) is that, until needed, such materials are often left exposed to the adverse weather conditions after delivery to the building site. Unless precautions are taken to protect them against the wet, such exposure can result in significant loss of the mechanical and fire retardancy properties of the silicate-based composition.

Soluble silicates are widely used as adhesives, coatings and bondings. Whilst their inherent solubility is an asset in many of the applications for which they are used, it is disadvantageous for applications where, for example, water resistance, integrity and strength of structure are deemed essential.

Considerable efforts have been made to minimise the solubility of silicates in compositions of the kind referred to above, for example by addition of metal (such as calcium and magnesium) salts. However, addition of such salts tends to result in a precipitated form rather than a product with a continuous networklike structure. The soluble salt formed in the precipitation reaction is deleterious to the physical integrity of the applied film and hence ultimately, strength of the resultant product.

Factors such as these are a deterrent to the use of silicates in for example the production of fire retardant coating composition. Fire retardant coating compositions find wide application in the construction and building maintenance industries, for example for application to flammable building materials before, or after, their incorporation in a building structure. Examples of flammable materials are polymer tiling and sheeting, e.g. of expanded polystyrene or urethane plastics and composites containing such plastics. Wood, wood chip and paper based materials can also benefit from application of such coatings. Included within the class of fire retardant coating compositions are so-called intumescent coatings which exert their protectant action partly by swelling when exposed to heat or fire.

In some cases, flammable materials are sold with the fire retardant coating pre-applied. For example, an intumescent fire retardant coating known as SafeCoat E84™ is pre-applied to expanded polystyrene/polyurethane foam articles prior to sale.

We have now found that improved composites having an aqueous coating can be produced from silicates in such a way that the solubility problem discussed above is significantly counteracted thus making compositions according to the present invention suitable for use as fire retardant compositions.

A further advantage of the compositions of the present invention is that they may be used to prepare fire retardant systems that are, when required, substantially free of halogen-containing compounds. Halogen-containing compounds may become undesirable because of their potential environmental status.

Another advantage of the compositions of the present invention is that they demonstrate a long life cycle time. They posses a long term stability and do not desintegrate spontaneously.

Thus a first aspect of the present invention provides a method of manufacturing a fire retardant composite according to claim 1, the method comprising the following steps:
i) providing beads of foamed polymer,
ii) applying a coating on the beads of step i), drying the coated beads, and
iii) shaping the thus coated beads into said composite.

According to a preferred embodiment of the present method step iii) is carried out in a press. Typically step iii) is carried out as a casting method. In another embodiment step ii) is carried out in a fluid bed, wherein the coating is sprayed onto the beads and an air flow is blown through the bed of beads. It is further preferred to carry out step ii) in an agitated bed, wherein the coating is sprayed on the beads, or to carry out step ii) in a mixer, for example a ribbon blender, wherein the coating is sprayed on the beads.

It is furthermore possible to replace step iii) by steps iv), v) and vi), in which step iv) transferring the coated beads to a press, v) applying steam to the coated beads present in said press, and vi) releasing the composite from the press.

According to the present invention, the coated beads obtained according to step ii) are transferred to a container and maintained under CO2 pressure during a certain residence time. After said pressure treatment with CO2 the CO2 pressure treated coated beads are transferred to a mould for carrying out step iii). An example of such a container is a closed pressure container.

It is preferred that the CO2 pressure treatment is carried out by a steady increase of the CO2 pressure from ambient pressure to a value in the range of 2 - 8 bar, especially in the range of 3 - 6 bar. When the pressure increase is not gradually, i.e. an abrupt increase from ambient pressure to the target value, a premature rupture or collapse of the coated beads may occur which is unfavourable.

The residence time of the coated beads during the CO2 pressure treatment at the target value is preferably in the range of 20 minutes - 180 minutes, especially 45 minutes - 120 minutes. After said CO2 pressure treatment the pressure is released and the thus treated coated beads are transferred to a mould for shaping said beads into a composite. It is preferred that such a transport of beads takes place without any further contact to the environment, i.e. directly from the container to the mould.

According to another embodiment step iii) takes place in presence of CO2. The injection of CO2 in the mould is preferably done intermittently, i.e. during specific moments of the moulding step. The moulding step iii) can be carried out under the influence of steam, heat and/or without steam.

The present inventors found that the introduction of CO2 during the present method of manufacturing has a positive influence on the sustainability of the composite obtained compared to a method in which no CO2 treatment takes place. In a preferred embodiment the CO2 treatment on the coated beads according to step ii) takes place at two different stages, i.e. in a container before the moulding step and in the mould itself during the moulding step iii).

The foamed polymer is selected from PS, PPO, PUR, PET, EPP, EPE, PLA, or a combination thereof. Its density lies preferably within the range of 5 - 500 kg/m³, whereas the density of the foamed polymer plus the coating lies within the range of 10-1000 kg/m³, on a dried coating basis.

Disclosed is a method of manufacturing a fire retardant composite in which a coating is used, i.e. an aqueous gel-forming composition comprising a silicate and a cement composition, and said coating is to be applied on the surface of a polymer bead.

The coating is an aqueous gel-forming composition comprising:
(a) from 10% to 50% preferably from 15% to 40% by weight of a cement composition comprising cement,
(b) from 40% to 80%, preferably 50% to 70%, of a silicate;
(c) 0.5% to 15%, preferably from 0.5% to 10% by weight of a carbonate, the balance being water and one or more optional other ingredients, all percentages being based on the weight of the dried coating present on the polymer beads.

By aqueous it is meant that the balance of the composition comprises water and optionally one or more other ingredients. Typically, the coating compositions from 10% to 40% by weight of water, preferably from 15% to 30%, based on the weight of the dried coating composition.

As used herein, the term "gel" refers to a substance that contains a continuous solid skeleton (in the present case based on the calcium silicate hydrate gel) enclosing a continuous liquid phase (in the present case, predominantly water) - see for example Sol-Gel Science, The Physics and Chemistry of Sol-Gel Processing (C. J. Brinker and G. W. Scherer) published by Academic Press Inc.

Any cement suitable for use in subterranean cementing operations may be used in accordance with the present invention. In one embodiment, the improved cement compositions comprise a hydraulic cement. A variety of hydraulic cements are suitable for use, including those comprising calcium, aluminum, silicon, oxygen, and/or sulfur, which set and harden by reaction with water. Such hydraulic cements include, but are not limited to, Portland cements, pozzolanic cements, gypsum cements, soil cements, calcium phosphate cements, high alumina content cements, silica cements, high alkalinity cements, and mixtures thereof. In certain embodiments, the cement compositions of may comprise a Portland cement. In certain embodiments, the Portland cement may be chosen from those classified as Class A, C, G, and H cements according to API Specification for Materials and Testing for Well Cements, API Specification 10, Fifth Ed., Jul. 1, 1990. Other cements that may be suitable for use in accordance with the present invention include, inter alia, low-density cements. Such low-density cements may be, inter alia, foamed cements or cements comprising another means to reduce their density, such as hollow microspheres, low-density elastic beads, fly ashes, blast furnace slag, or other density-reducing additives known in the art.

As the silicate component silicates with varying composition concerning Si02: alkalioxide molar ratio and/or dry solids can be used, e.g. liquid silicates as waterglas, i.e. sodium waterglas and potassium waterglas. In addition powdery amorphous SiO2 can be used as an additional component for densifying the coating.

These present materials may also be referred to as co-gels or coagels. Initially, the solid may be in the form of dispersed, discontinuous solid particles (a sol), but these individual particles coalesce to form a continuous solid network. The compositions are initially in the form of a sol which converts over time to a gel.

The cementious calcium silicate hydrate gel as used in the present invention is typically formed by the sol-gel route and this can be effected *in situ* by forming the silicate at the point of use. The present invention is limited to methods of manufacturing fire retardant composites, comprising beads of foamed polymer having a coating, the composites comprising beads of foamed polymer and their use as a construction material and an insulant.

A sol-gel is basically a reaction product which is initially formed as a liquid but which subsequently forms a gel and ultimately solidifies.

An application system for forming a coating composition from a precursor system as described above and applying the coating composition so formed to a foamed polymer substrate may comprise means for admixture of components (a), (b) and (c) and application means for effecting coating of the substrate with the resulting mixture.

A further aspect of the present invention provides the use of a composite according to the present invention as a construction material, especially in buildings, as well as an insulant, especially in buildings. The construction element is chosen from the group panel, door, sheeting, ceiling and tile. Another application of the present composite is as a construction material for packaging.

Coatings formed from compositions such as described above exhibit superior physical integrity and long term stability, in comparison with conventional silicate systems, by virtue of the combination of the present components (a), (b) and (c), as mentioned before, being present in the form of a network of bonded molecules that extends throughout the coating.

Typically the composition prior to application to a foamed polymer comprises cement composition, silicate and moisture, in a range of 4 % -10% by weight, 10% - 30% by weight, and 65% - 85% by weight, based on the total weight of the aqeous composition, respectively.

After applying the coating composition on the polymer beads and after the step of drying and moulding the coating composition comprising beads the final moulding will be characterised by the coating composition as mentioned here before. Please note that in the gel phase no carbonate is present. In addition to that no delaying agent like oxycarbon, fluorosilicate, borate, gluconic acid, saccharide, and citric acid is present.

The compositions (which may optionally be prepared from a precursor system at the point of use) may for example be applied to the foamed polymer by means of a spray gun (optionally air or gas pressurised), a roller system or a brush system. Alternatively the foamed polymer to be treated may be coated or impregnated by immersion in the coating composition while contained in a suitable vessel, for example in a fluid bed, an agitated bed or in a mixer like a ribbon blender.

The compositions which are to be used as fire retardants are especially suited to those which comprise an expanded or foamed polymer.

Preferably, the moisture content of the resultant cured or dried composition film, i.e. the coating, is no greater than 40%, more preferably no greater than 30% and greater than 10% by weight, preferably greater than 15% by weight, on basis of the resultant coating.

Preferably, the properties of the film resulting from the compositions of the invention may be improved by holding the composition at a temperature of 50 °C or more while for at least 30 minutes.

The final composites comprising polymer beads provided with the present coating meet the B and D fire classes SBI. In addition, the final composites show leaching values of about 5 to 10%. The mechanical properties of the final composites are in the range of from 150 to 500 kPa.

The present invention will now be explained in more detail by way of the following non-limiting Example.

### Example: Preparation of a composite

During the coating step a gel comprising a mixture of about 21 % by weight cement composition-silicate has been prepared. An amount of 100 parts by weight of a cement III dispersion (dry solids content: 35%) was added to an amount of 435 parts by weight of natrium silicate (molar ratio: 2.8. dry solids content: 18%) under high shear mixing. An amount of 13 parts by weight of a SiO2 dispersion (dry solids content: 33%) was added as well. After combining these starting materials a gel reaction occurs within a few minutes. Such a gel may have the following composition: Cement (6.4%), silicate (14.3%), SiO2 (0.8%) and moisture (78.5%).

The gel as formed is brought into contact with the foamed EPS beads in a fluid bed by spraying the coating onto the beads.

The beads thus provided may have a coating composition like cement (25%), silicate (55.8%), SiO2 (3.1%), and moisture (16.1%), after drying.

After the afore mentioned coating step the thus coated beads are transferred to a container. The pressure increase from atmospheric to a value of 4 bar CO2 took 1 hour. At the target value of 4 bar CO2 pressure the pressure was maintained during 1 hour and released to a value of 1 bar CO2 in a period of 45 minutes. The thus CO2 pressure treated coated beads were transferred to a mould in which under the influence of steam, heat and CO2 the coated beads are formed into a final composite. The CO2 is injected under a pressure of about 1.0 - 1.3 bar for several seconds during moulding.

The coating composition thus obtained comprises cement (23.5%) silicate (52.5%), SiO2 (2.9%), carbonate (5.1%), and moisture (16%). The percentages mentioned refer to weight percentages.

## Claims

1. A method of manufacturing a fire retardant composite, the method comprising the following steps:
i) providing beads of foamed polymer,
ii) applying a coating on the beads of step i), drying the coated beads and
iii) shaping the thus coated beads into said composite, **characterized in that**, before the application of step iii), the beads coated according to step ii) are transferred to a container for a pressure treatment with CO₂.

2. A method according to claim 1, in which the pressure treatment is carried out at a pressure range of 2-8 bar, especially 3-6 bar CO₂.

3. A method according to any one of the claims 1-2, in which the residence time of the beads coated according to step ii) in said container is in a range of 20 minutes - 180 minutes.

4. A method according to any one or more of the claims 1-3, in which the pressure increase with CO₂ is carried gradually.

5. A method according to any one or more of the claims 1-3, in which the release of pressure at the end of pressure treatment with CO₂ is carried out gradually.

6. A method according to any one or more of the claims 1-5, in which in step iii) an injection of CO₂ under pressure in the mould takes place.

7. A method as claimed in any one of the preceding claims, in which step iii) is carried out in a press.

8. A method as claimed in any one of the preceding claims, in which step ii) is carried out in one of a fluid bed, an agitated bed or a mixer, for example a ribbon blender, wherein in the embodiment of said fluid bed the coating is sprayed on the beads and an air flow is blown through the bed of beads, wherein in the embodiment of said agitated bed or said mixer the coating is sprayed onto the beads.

9. A method according to any one or more of the preceding claims, in which step iii) comprises further steps iv), v) and vi), in which step iv) transferring the coated beads to a press, v) applying steam, and possibly CO₂, to the coated beads present in said press, and vi) releasing the composite from the press.

10. A method as claimed in any one of the preceding claims in which the coating is an aqueous gel-forming composition, comprising:
(a) from 10% to 50%, preferably from 15% to 40% by weight of a cement composition comprising cement;
(b) from 40 to 80%, preferably from 50% to 70% by weight of a silicate;
(c) 0.5% to 15%, preferably from 0.5% to 10% by weight of a carbonate;
the balance being the water and one or more optional other ingredients, all percentages being based on the weight of the cured coating.

11. A method as claimed in claim 10, in which the water is present in an amount in the range of from about 10% to 40% by weight, preferably from 15% to 30%, of the cured coating.

12. A method as claimed in any of the preceding claims 1-11, in which the foamed polymer has a density of 5-500 kg/m³, in which the foamed polymer is selected from PS, PPO, PUR, PET, EPP, EPE, PLA, EPS or a combination thereof.

13. A composite of a foamed polymer having a coating with fire retardant properties obtained according to a method as claimed in any of the preceding claims, **characterised in that** the coating is produced using an aqueous gel-forming composition, comprising
(a) from 10% to 50%, preferably from 15% to 40% by weight of a cement composition comprising cement;
(b) from 40 to 80%, preferably from 50% to 70% by weight of a silicate;
(c) 0.5% to 15%, preferably from 0.5% to 10% by weight of a carbonate;
the balance being the water and one or more optional other ingredients, all percentages being based on the weight of the cured coating.

14. A construction material in the group of packaging and buildings chosen from the group of panel, door, sheeting, ceiling and tile, manufactured on basis of a composite according to claim 13.

15. An insulant manufactured on basis of a composite according to claim 13.

## Patentansprüche

1. Verfahren zur Herstellung eines feuerhemmenden Kompositwerkstoffs, wobei das Verfahren die folgenden Schritte umfasst:
i) Bereitstellen von Perlen aus geschäumtem Polymer,
ii) Aufbringen einer Beschichtung auf die Perlen aus Schritt i), Trocknen der beschichteten Perlen und
iii) Formen der so beschichteten Perlen zu dem genannten Kompositwerkstoff,
**dadurch gekennzeichnet, dass**
vor der Anwendung von Schritt iii) die gemäß Schritt ii) beschichteten Perlen zu einem Behälter für eine Druckbehandlung mit CO₂ überführt werden.

2. Verfahren nach Anspruch 1, wobei die Druckbehandlung bei einem Druckbereich von 2 bar bis 8 bar, insbesondere 3 bar bis 6 bar, CO₂ durchgeführt wird.

3. Verfahren nach einem der Ansprüche 1 bis 2, wobei die Verweilzeit der gemäß Schritt ii) beschichteten Perlen in dem genannten Behälter in einem Bereich von 20 Minuten bis 180 Minuten liegt.

4. Verfahren nach einem oder mehreren der Ansprüche 1 bis 3, wobei der Druckanstieg mit CO₂ sukzessive durchgeführt wird.

5. Verfahren nach einem oder mehreren der Ansprüche 1 bis 3, wobei der Druckablass am Ende der Druckbehandlung mit CO₂ sukzessive durchgeführt wird.

6. Verfahren nach einem oder mehreren der Ansprüche 1 bis 5, wobei in Schritt iii) eine Injektion von CO₂ unter Druck in die Form stattfindet.

7. Verfahren wie in einem der vorhergehenden Ansprüche beansprucht, wobei Schritt iii) in einer Presse durchgeführt wird.

8. Verfahren wie in einem der vorhergehenden Ansprüche beansprucht, wobei Schritt ii) in einem von einem Fließbett, einem bewegten Bett oder einem Mischer, beispielsweise einem Bandmischer, durchgeführt wird, wobei bei der Ausgestaltung des genannten Fließbetts die Beschichtung auf die Perlen gesprüht wird und ein Luftstrom durch das Bett von Perlen geblasen wird, wobei bei der Ausgestaltung des genannten bewegten Betts oder des genannten Mischers die Beschichtung auf die Perlen gesprüht wird.

9. Verfahren nach einem oder mehreren der vorhergehenden Ansprüche, wobei Schritt iii) weitere Schritte iv), v) und vi) umfasst, wobei Schritt iv) das Überführen der beschichteten Perlen zu einer Presse, v) das Aufbringen von Dampf und gegebenenfalls CO₂ auf die in der genannten Presse vorhandenen beschichteten Perlen und vi) das Lösen des Kompositwerkstoffs aus der Presse umfasst.

10. Verfahren wie in einem der vorhergehenden Ansprüche beansprucht, wobei die Beschichtung eine wässrige gelbildende Zusammensetzung ist, umfassend:
(a) von 10 Gew.-% bis 50 Gew.-%, vorzugsweise von 15 Gew.-% bis 40 Gew.-%, einer Zement umfassenden Zementzusammensetzung;
(b) von 40 Gew.-% bis 80 Gew.-%, vorzugsweise von 50 Gew.-% bis 70 Gew.-%, eines Silikats;
(c) von 0,5 Gew.-% bis 15 Gew.-%, vorzugsweise von 0,5 Gew.-% bis 10 Gew.-%, eines Carbonats;
wobei der Rest das Wasser und ein oder mehrere optionale andere Bestandteile sind, wobei sich alle Prozentangaben auf das Gewicht der ausgehärteten Beschichtung beziehen.

11. Verfahren wie in Anspruch 10 beansprucht, wobei das Wasser in einer Menge im Bereich von etwa 10 Gew.-% bis 40 Gew.-%, vorzugsweise von 15 Gew.-% bis 30 Gew.-%, der ausgehärteten Beschichtung vorhanden ist.

12. Verfahren wie in einem der vorhergehenden Ansprüche 1 bis 11 beansprucht, wobei das geschäumte Polymer eine Dichte von 5 kg/m³ bis 500 kg/m³ aufweist, wobei das geschäumte Polymer ausgewählt ist aus PS, PPO, PUR, PET, EPP, EPE, PLA, EPS oder einer Kombination davon.

13. Kompositwerkstoff aus einem geschäumten Polymer mit einer Beschichtung mit feuerhemmenden Eigenschaften, der nach einem Verfahren wie in einem der vorhergehenden Ansprüche beansprucht erhalten wird,
**dadurch gekennzeichnet, dass**
die Beschichtung unter Verwendung einer wässrigen gelbildenden Zusammensetzung hergestellt wird, umfassend
(a) von 10 Gew.-% bis 50 Gew.-%, vorzugsweise von 15 Gew.-% bis 40 Gew.-%, einer Zement umfassenden Zementzusammensetzung;
(b) von 40 Gew.-% bis 80 Gew.-%, vorzugsweise von 50 Gew.-% bis 70 Gew.-%, eines Silikats;
(c) von 0,5 Gew.-% bis 15 Gew.-%, vorzugsweise von 0,5 Gew.-% bis 10 Gew.-%, eines Carbonats;
wobei der Rest das Wasser und ein oder mehrere optionale andere Bestandteile sind, wobei sich alle Prozentangaben auf das Gewicht der ausgehärteten Beschichtung beziehen.

14. Baumaterial in der Gruppe von Verpackungen und Gebäuden ausgewählt aus der Gruppe von Paneel, Tür, Verkleidung, Decke und Fließe, das auf Grundlage eines Kompositwerkstoffs nach Anspruch 13 hergestellt ist.

15. Dämmstoff, der auf Grundlage eines Kompositwerkstoffs nach Anspruch 13 hergestellt ist.

## Revendications

1. Procédé de fabrication d'un composite ignifuge, le procédé comprenant les étapes suivantes consistant :
i) à fournir des billes de polymère expansé,
ii) à appliquer un revêtement sur les billes de l'étape i), à sécher les billes revêtues et
iii) à façonner les billes ainsi revêtues sous forme dudit composite,
**caractérisé en ce que**, avant l'application de l'étape iii), les billes revêtues selon l'étape ii) sont transférées dans un récipient pour un traitement sous pression au CO₂.

2. Procédé selon la revendication 1, dans lequel le traitement sous pression est effectué à une plage de pression allant de 2 à 8 bar, en particulier de 3 à 6 bar de CO₂.

3. Procédé selon l'une quelconque des revendications 1 et 2, dans lequel le temps de séjour des billes revêtues selon l'étape ii) dans ledit récipient est compris dans une plage allant de 20 minutes à 180 minutes.

4. Procédé selon l'une quelconque ou plusieurs des revendications 1 à 3, dans lequel l'augmentation de pression de CO₂ est effectuée progressivement.

5. Procédé selon l'une quelconque ou plusieurs des revendications 1 à 3, dans lequel le relâchement de pression à la fin du traitement sous pression au CO₂ est effectué progressivement.

6. Procédé selon l'une quelconque ou plusieurs des revendications 1 à 5, dans lequel lors de l'étape iii) une injection de CO₂ sous pression dans le moule a lieu.

7. Procédé tel que revendiqué dans l'une quelconque des revendications précédentes, dans lequel l'étape iii) est effectuée dans une presse.

8. Procédé tel que revendiqué dans l'une quelconque des revendications précédentes, dans lequel l'étape ii) est effectuée dans l'un parmi un lit fluidisé, un lit agité ou un malaxeur, par exemple un mélangeur à ruban, où dans le mode de réalisation dudit lit fluidisé, le revêtement est pulvérisé sur les billes et un flux d'air est soufflé à travers le lit de billes, où dans le mode de réalisation dudit lit agité ou dudit mélangeur, le revêtement est pulvérisé sur les billes.

9. Procédé selon l'une quelconque ou plusieurs des revendications précédentes, dans lequel l'étape iii) comprend des étapes iv), v) et vi) supplémentaires, où l'étape iv) consiste à transférer les billes revêtues à une presse, l'étape v) consiste à appliquer de la vapeur, et éventuellement du CO2, sur les billes revêtues présentes dans ladite presse, et l'étape vi) consiste à libérer le composite de la presse.

10. Procédé tel que revendiqué dans l'une quelconque des revendications précédentes, dans lequel le revêtement est une composition aqueuse formant gel, comprenant :
(a) 10% à 50%, de préférence 15% à 40% en poids d'une composition de ciment comprenant un ciment ;
(b) 40% à 80%, de préférence 50% à 70% en poids d'un silicate ;
(c) 0,5% à 15%, de préférence 0,5% à 10% en poids d'un carbonate ;
le reste étant de l'eau et un ou plusieurs autre(s) ingrédient(s) facultatif(s), tous les pourcentages étant basés sur le poids du revêtement durci.

11. Procédé tel que revendiqué dans la revendication 10, dans lequel l'eau est présente en une quantité comprise dans la plage allant d'environ 10% à 40% en poids, de préférence de 15% à 30%, du revêtement durci.

12. Procédé tel que revendiqué dans l'une des revendications 1 à 11 précédentes, dans lequel le polymère expansé a une densité allant de 5 à 500 kg/m³, où le polymère expansé est choisi parmi PS, PPO, PUR, PET, EPP, EPE, PLA, EPS ou une combinaison de ceux-ci.

13. Composite d'un polymère expansé ayant un revêtement présentant des propriétés ignifuges obtenu selon un procédé tel que revendiqué dans l'une des revendications précédentes, **caractérisé en ce que** le revêtement est produit en utilisant une composition aqueuse formant gel, comprenant
(a) 10% à 50%, de préférence 15% à 40% en poids d'une composition de ciment comprenant un ciment ;
(b) 40% à 80%, de préférence 50% à 70% en poids d'un silicate ;
(c) 0,5% à 15%, de préférence 0,5% à 10% en poids d'un carbonate ;
le reste étant de l'eau et un ou plusieurs autre(s) ingrédient(s) facultatif(s), tous les pourcentages étant basés sur le poids du revêtement durci.

14. Matériau de construction du groupe des emballages et des bâtiments choisi dans le groupe constitué par un panneau, une porte, un revêtement en feuilles, un plafond et un carreau, fabriqué à base d'un composite selon la revendication13.

15. Isolant fabriqué à base d'un composite selon la revendication 13.
